(19) Europäisches Patentamt
European Patent Office
Office européen des brevets

(11) **EP 1 827 939 B1**

(12) **EUROPÄISCHE PATENTSCHRIFT**

(45) Veröffentlichungstag und Bekanntmachung des Hinweises auf die Patenterteilung:
**18.09.2013 Patentblatt 2013/38**

(21) Anmeldenummer: 05823501.1

(22) Anmeldetag: **19.12.2005**

(51) Int Cl.:
*B60T 7/12* (2006.01)    *B60W 30/18* (2012.01)

(86) Internationale Anmeldenummer:
**PCT/EP2005/056934**

(87) Internationale Veröffentlichungsnummer:
**WO 2006/067125 (29.06.2006 Gazette 2006/26)**

(54) **ANFAHRHILFE FÜR EIN KRAFTFAHRZEUG**

HILL START ASSIST SYSTEM AND METHOD FOR A MOTOR VEHICLE

AIDE AU DEMARRAGE POUR VEHICULE AUTOMOBILE

(84) Benannte Vertragsstaaten:
**DE FR**

(30) Priorität: 20.12.2004 DE 102004062453
02.04.2005 DE 102005015229
19.12.2005 DE 102005061123

(43) Veröffentlichungstag der Anmeldung:
**05.09.2007 Patentblatt 2007/36**

(73) Patentinhaber:
• **Continental Teves AG & Co. oHG**
**60488 Frankfurt am Main (DE)**
• **Volkswagen Aktiengesellschaft**
**38440 Wolfsburg (DE)**

(72) Erfinder:
• **LUDWIG, Dorothea**
**64291 Darmstdt (DE)**
• **MANN-WAHRENBERG, Alexander**
**35116 Mainz (DE)**
• **SCHINELLER, Leo**
**38553 Wasbüttel (DE)**

(56) Entgegenhaltungen:
EP-A- 1 410 940      EP-A- 1 442 951
DE-A1- 10 065 589    DE-A1- 10 306 363
US-B1- 6 439 675

## Beschreibung

Die Erfindung betrifft ein Verfahren zum Verhindern, dass ein Fahrzeug bei einem Anfahrvorgang in eine der Anfahrrichtung entgegengesetzte Richtung rollt, wobei während eines Stillstands des Fahrzeugs eine Bremskraft an wenigstens einer Radbremse aufgebaut und/oder aufrechterhalten wird.

Die Erfindung betrifft ferner eine zur Durchführung des Verfahrens geeignete Vorrichtung.

Unter der Bezeichnung Hillholder oder der im Folgenden verwendeten Bezeichnung Hill Start Assist (HSA) sind Anfahrhilfen bekannt, bei denen der Fahrer eines Fahrzeugs anhand eines Verfahrens der eingangs genannten Art bei einem Anfahrvorgang an einer Steigung unterstützt wird.

Üblicherweise ist es dabei vorgesehen, dass eine Betriebsbremsanlage des Fahrzeugs mit einer Energieversorgungseinheit ausgestattet ist, mittels welcher automatisch ein bestimmter Bremsdruck in einer oder mehreren Radbremsen des Fahrzeugs aufgebaut oder ein von dem Fahrer in einer oder mehreren Radbremsen eingestellter Bremsdruck aufrechterhalten wird, um das Fahrzeug solange im Stillstand zu halten, bis ein Anfahren des Fahrzeugs festgestellt wird. Alternativ kann es vorgesehen sein, dass während des Stillstands eine Bremskraft mittels einer fremdsteuerbaren Feststellbremseinrichtung erzeugt wird, welche während des Anfahrvorgangs gelöst wird.

Bei der HSA-Funktion ist es entscheidend, dass die Bremskraft während des Anfahrvorgangs weder zu früh verringert wird, wodurch das Fahrzeug zurückrollen könnte, noch zu spät, wodurch die Vortriebskraft beim Anfahren verringert werden würde, was von dem Fahrer als ein Mangel an Dynamik wahrgenommen werden würde.

Hierzu ist es bekannt, die Bremskraft während eines Anfahrvorgangs entsprechend einer Momentenbilanzierung von auf ein Rad des Fahrzeugs wirkenden Hangabtriebs-, Brems- und Motorantriebsmomenten zu verringern, wie es in der europäischen Patentschrift EP 1 023 547 B1 beschrieben ist. Dabei ist es jedoch erforderlich, das Antriebsmoment bzw. die für die Steuerung des Bremskraftabbaus maßgeblichen Parameter anhand eines Motormodells zu ermitteln, wozu für jede Motor-Getriebe-Variante eines Fahrzeugs Motorkennfelder aufgenommen und die Parameter an die jeweiligen Motorkennfelder angepasst werden müssen, wofür in der Regel auch eine mehrmalige Überprüfung und Anpassung erforderlich ist.

Dieses Vorgehen ist sehr zeitaufwendig, was angesichts der oftmals relativ kurven Zeiträume, welche für die Entwicklung zur Verfügung stehen, sehr problematisch ist. Darüber hinaus ist es üblich, dass die Motorkennfelder auch in der laufenden Serie angepasst werden, was zu einer Verstimmung des HSA führen kann bzw. eine Anpassung des HSA erforderlich macht.

Ferner wurde bei der bekannten Vorgehensweise oftmals festgestellt, dass die Bremskraft zu früh oder zu spät verringert wird, so dass das Fahrzeug bei dem Anfahrvorgang zurückrollt oder die Dynamik beim Anfahren beeinträchtigt ist. Aufgrund der erforderlichen individuellen Anpassung der Parameter an die verschiedenen Motor-Getriebe-Varianten eines Fahrzeugtyps zeigte sich zudem ein sehr unterschiedliches Anfahrverhalten bei verschiedenen Varianten, was in einem Serienfahrzeug nicht wünschenswert ist.

Weitere gattungsgemäße Anfahrhilfen sind aus DE 103 06 363 A1 sowie EP 1 442 951 A bekannt.

Es ist daher eine Aufgabe der vorliegenden Erfindung, ein Verfahren der eingangs genannten Art so weiterzuentwickeln, dass der bisher erforderliche Zeitaufwand bei der Anpassung einer Anfahrhilfe reduziert wird. Es ist ferner eine Aufgabe der Erfindung, eine zur Durchführung des Verfahrens geeignete Vorrichtung zu schaffen.

Erfindungsgemäß wird diese Aufgabe durch ein Verfahren mit den Merkmalen des Patentanspruchs 1 sowie durch eine Vorrichtung mit den Merkmalen des Patentanspruchs 13 gelöst. Zweckmäßige Weiterbildungen des Verfahrens sowie der Vorrichtung sind Gegenstand der Unteransprüche.

Die Erfindung sieht dabei vor, dass ein Verfahren der eingangs genannten Art so durchgeführt wird, dass ein Vergleich zwischen einem Motordrehzahlgradienten und einem Motordrehzahlgradientenschwellenwert sowie ein Vergleich zwischen einem Pedalweg, um den ein Fahrpedal des Fahrzeugs eingetreten ist, und einem Pedalwegschwellenwert durchgeführt werden, und dass die Bremskraft an der Radbremse verringert wird, wenn festgestellt wird, dass der Motordrehzahlgradient größer ist als der Motordrehzahlgradientenschwellenwert und/oder der Pedalweg, um den das Fahrpedal eingetreten ist, größer ist als der Pedalwegschwellenwert.

Ein weiterer Gegenstand der Erfindung ist eine Vorrichtung zum Verhindern, dass ein Fahrzeug bei einem Anfahrvorgang in eine der Anfahrrichtung entgegengesetzte Richtung rollt, umfassend wenigstens eine Radbremse, an der während eines Stillstands des Fahrzeugs eine Bremskraft einstellbar ist, einen Antriebsmotor, der durch ein Fahrpedal steuerbar ist, und wenigstens ein Vergleichsmittel, in dem ein Vergleich zwischen einem Motordrehzahlgradienten und einem Motordrehzahlgradientenschwellenwert sowie ein Vergleich zwischen einem Pedalweg, um den das Fahrpedal eingetreten ist, und einem Pedalwegschwellenwert durchführbar sind, wobei die Bremskraft in der Radbremse verringerbar ist, wenn in dem Vergleichsmittel festgestellt wird, dass der Motordrehzahlgradient größer ist als der Motordrehzahlgradientenschwellenwert und/oder der Pedalweg, um den das Fahrpedal eingetreten ist, größer ist als der Pedalwegschwellenwert.

Da die vorliegende Steigung einen maßgeblichen Einfluss auf die Momentenbilanz bei einem Anfahrvorgang hat, ist es in dem erfindungsgemäßen Verfahrens und der erfindungsgemäßen Vorrichtung ferner vorgesehen, dass der Motordrehzahlgradientenschwellenwert und der Pedalwegschwellenwert in Abhängigkeit von einem vorliegenden Längsneigungswinkel des Fahrzeugs ermittelt werden.

Die Erfindung ist für beliebige Motor-Getriebe-Varianten eines Fahrzeugtyps gleichermaßen anwendbar und kann in sehr einfacher Weise an verschiedene Fahrzeugtypen angepasst werden. Sie basiert auf der empirischen Erkenntnis, dass im Wesentlichen unabhängig von dem eingesetzten Antriebsmotor und dem verwendeten Getriebe ein ausreichend großes Antriebsmoment zur Verfügung steht, um das Anrollen des Fahrzeugs in eine der Anfahrrichtung entgegengesetzte Richtung zu verhindern, wenn der Motordrehzahlgradient, d.h. die Änderungsrate der Drehzahl des Antriebsmotors, größer ist als ein Motordrehzahlgradientenschwellenwert, und wenn der Pedalweg, um den das Fahrpedal des Fahrzeugs eingetreten ist, größer ist als ein Pedalwegschwellenwert.

Somit können das erfindungsgemäße Verfahren und die erfindungsgemäße Vorrichtung ohne umfangreiche und zeitaufwendige Anpassungsarbeiten bei verschiedenen Motor-Getriebe-Varianten eines Fahrzeugtyps und bei verschiedenen Fahrzeugtypen eingesetzt werden. Es hat sich dabei auch gezeigt, dass der Einsatz der Erfindung zu einem vergleichbaren Anfahrverhalten bei verschiedenen Motor-Getriebe-Varianten führt. Dies hat gerade bei Fahrzeugen mit einer großen Vielfalt von Motor-Getriebe-Varianten eine erhebliche Reduzierung des Zeitaufwands bei der Applizierung eines HSA-Systems zur Folge. Ferner können der Motordrehzahlgradientenschwellenwert und/oder der Pedalwegschwellenwert in einfacher Weise entsprechend den Wünschen des Fahrzeugerstausrüsters verändert werden, um ein früheres oder späteres Lösen der Bremse zu erreichen, ohne dabei die Robustheit des HSA-Systems zu beeinträchtigen.

Die Erfindung ermöglicht somit eine signifikante Reduzierung der Entwicklungszeit und eine damit verbundene Reduzierung der bei der Applizierung eines HSA-Systems entstehenden Entwicklungskosten, wobei der Applizierungsaufwand bei einem durchschnittlichen Fahrzeug der Kompaktklasse mit einer großen Anzahl von Motor-Getriebe-Varianten auf etwa 10% bis 20% des Aufwandes verringert werden konnte, der sich bei dem Vorgehen nach dem Stand der Technik ergeben würde. Gleichzeitig wurde festgestellt, dass die Zuverlässigkeit eines HSA-Systems durch die Erfindung weiter gesteigert wird, da diese eine besonders zuverlässige Erkennung eines Anfahrens ermöglicht.

Empirische Untersuchungen haben ergeben, dass ein besonders komfortables Anfahren ermöglicht wird, wenn der Motordrehzahlgradientenschwellenwert größer als 1000 s$^{-2}$ ist.

In einer besonders vorteilhaften Ausführungsform des erfindungsgemäßen Verfahrens und der erfindungsgemäßen Vorrichtung ist es vorgesehen, dass der Motordrehzahlgradientenschwellenwert 1500 s$^{-2}$ beträgt.

Weiterhin hat sich im Rahmen empirischer Untersuchungen gezeigt, dass ein besonders komfortables Anfahren ermöglicht werden kann, wenn der Pedalwegschwellenwert größer als 20% des maximalen Pedalwegs ist.

Unter dem maximalen Pedalweg wird der Weg verstanden, den das Fahrpedal ausgehend von einer gelösten Stellung bis zu einer Vollgasstellung, bei der es vollständig eingetreten ist, bewegt werden kann.

Eine besonders vorteilhafte Ausgestaltung des erfindungsgemäßen Verfahrens und der erfindungsgemäßen Vorrichtung zeichnet sich dadurch aus, dass der Pedalwegschwellenwert 25% des maximalen Pedalwegs beträgt.

Die auf das Fahrzeug wirkende Hangabtriebskraft erhöht sich dabei mit dem Längsneigungswinkel des Fahrzeugs, so dass bei größeren Längsneigungswinkeln ein höheres Anfahrmoment erforderlich ist. Um die Bremskraft bei großen Längsneigungswinkeln nicht zu frühzeitig zu verringern, ist eine zweckmäßige Ausführungsform des erfindungsgemäßen Verfahrens und der erfindungsgemäßen Vorrichtung dadurch gekennzeichnet, dass der Motordrehzahlgradientenschwellenwert mit dem Längsneigungswinkel des Fahrzeugs ansteigt.

Da die Hangabtriebskraft mit dem Längsneigungswinkel zunimmt, hat es sich als besonders zweckmäßig erwiesen, dass der Pedalwegschwellenwert mit dem Längsneigungswinkel des Fahrzeugs ansteigt. Damit kann auch bei größeren Längsneigungswinkeln sichergestellt werden, dass beim Lösen der Bremse ein ausreichend großes Antriebsmoment zur Verfügung steht.

In einer bevorzugten Ausführungsform des erfindungsgemäßen Verfahrens und der erfindungsgemäßen Vorrichtung ist es vorgesehen, dass die Bremskraft an der Radbremse dadurch erzeugt wird, dass in der Radbremse ein Bremsdruck aufgebaut und/oder aufrechterhalten wird, wobei eine Verringerung der Bremskraft dadurch erfolgt, dass der Bremsdruck mit einem Druckabbaugradienten reduziert wird.

Weiterhin ist festgestellt worden, dass anhand der Fahrpedalstellung während des Anfahrens bestimmt werden kann, ob der Fahrer ein schnelles oder ein langsames Anfahren wünscht. Eine besonders vorteilhafte Weiterbildung des erfindungsgemäßen Verfahrens und der erfindungsgemäßen Vorrichtung zeichnet sich daher dadurch aus, dass der Bremsdruckabbaugradient in Abhängigkeit von dem Pedalweg, um den das Fahrpedal eingetreten ist, ermittelt wird.

Üblicherweise tritt der Fahrer das Fahrpedal weiter ein, wenn er ein schnelles Anfahren des Fahrzeugs wünscht. Um dem Rechnung zu tragen, ist eine besonders zweckmäßige Ausgestaltung des erfindungsgemäßen Verfahrens und der erfindungsgemäßen Vorrichtung dadurch gekennzeichnet, dass der Bremsdruckabbaugradient mit dem Pedalweg, um den das Fahrpedal eingetreten ist, ansteigt.

Zudem ist es in einer vorteilhaften Weiterbildung des erfindungsgemäßen Verfahrens und der erfindungsgemäßen Vorrichtung vorgesehen, dass der Bremsdruckabbaugradient in Abhängigkeit von dem in der Radbremse vorliegenden Bremsdruck ermittelt wird.

Um zu verhindern, dass die Dynamik bei dem Anfahrvorgang bei Vorliegen eines hohen Bremsdrucks in der Radbremse beeinträchtigt wird, zeichnet sich eine zweckmäßige Ausführungsform des erfindungsgemäßen Verfahrens und der erfindungsgemäßen Vorrichtung dadurch aus, dass der Bremsdruckabbaugradient mit dem in der Radbremse vorliegenden Bremsdruck ansteigt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt

Fig. 1 eine schematische Ansicht eines zur Durchführung der Erfindung geeigneten Kraftfahrzeugs,

Fig. 2 ein Diagramm, in dem die Abhängigkeit des Motordrehzahlgradientenschwellenwertes von der vorliegenden Steigung veranschaulicht ist,

Fig. 3 ein Diagramm, in dem die Abhängigkeit des Pedalwegschwellenwertes von der vorliegenden Steigung veranschaulicht ist,

Fig. 4 eine Kennlinie zur Anpassung des Druckabbaugradienten an den Pedalweg, um den das Fahrpedal beim Anfahren eingetreten ist und

Fig. 5 eine Kennlinie zur Anpassung des Druckabbaugradienten an den zu Beginn des Anfahrvorgangs vorliegenden Bremsdruck.

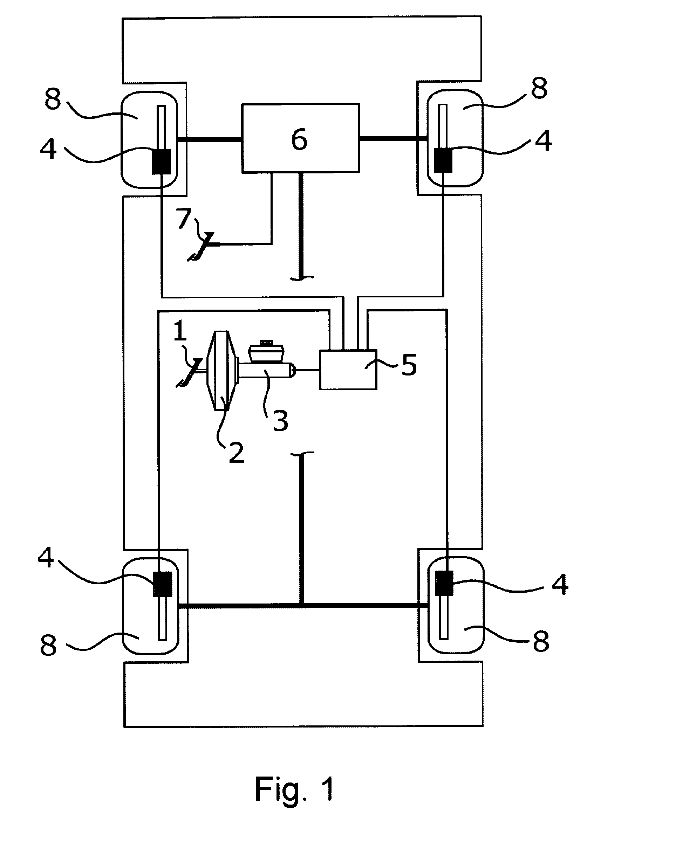

In Figur 1 ist ein Kraftfahrzeug dargestellt, welches über die wesentlichen Komponenten für eine HSA-Funktion verfügt. Es weist dabei eine Betriebsbremsanlage auf, die vorzugsweise als hydraulische Bremsanlage ausgeführt ist, und von dem Fahrer mittels einer Betätigungseinrichtung 1 betätigt wird, die beispielsweise als Bremspedal ausgebildet ist. Die Betätigungseinrichtung 1 wirkt über einen Bremskraftverstärker 2 auf einen Hauptbremszylinder 3 ein, in dem innerhalb eines Druckmittels ein Bremsdruck erzeugbar ist, der auf die Radbremsen 4 übertragbar ist. Die Übertragung erfolgt dabei üblicherweise, jedoch nicht notwendig, über eine Hydraulikeinheit 5, welche auch zur Durchführung eines elektronischen Stabilitätsprogramms (ESP) verwendet wird, und dem Fachmann an sich bekannt ist. Der in den Radbremsen 4 vorliegende Bremsdruck wird dabei im Folgenden mit $p_{Rad}$ bezeichnet. Weiterhin verfügt das Kraftfahrzeug über ein in der Figur 1 nicht dargestelltes Bremsensteuergerät zur Steuerung einer oder mehrerer Energieversorgungseinheiten der Betriebsbremsanlage, mittels derer sich fremdgesteuert ein Bremsdruck $p_{Rad}$ in den Radbremsen 4 aufbauen lässt. Vorzugsweise ist der Bremskraftverstärker 2 dabei als aktiver Bremskraftverstärker ausgebildet, mit dem innerhalb des Hauptbremszylinders 3 durch eine entsprechende Ansteuerung mittels des Bremsensteuergerätes ein Bremsdruck erzeugbar ist, welcher an die Radbremsen 4 übertragen wird. Gleichfalls kann auch vorgesehen sein, dass die Radbremsen über ein in der Figur nicht dargestelltes elektronisch steuerbares Trennventil mit dem Hauptbremszylinder 3 verbunden sind, wobei das Trennventil mittels des Bremsensteuergerätes geschlossen werden kann, um einen in den Radbremsen 4 bestehenden Bremsdruck $p_{Rad}$ aufrechtzuerhalten. Üblicherweise ist ein derartiges Trennventil dabei in der Hydraulikeinheit 5 enthalten. Um eine gezielte Einstellung eines Druckabbaugradienten beim Öffnen des Trennventils vornehmen zu können, ist das Trennventil vorzugsweise als analoges bzw. analogisiertes Ventil ausgebildet.

Eine derartige Betriebsbremsanlage mit einer fremdsteuerbaren Energieversorgungseinheit erlaubt die Realisierung einer HSA-Funktion, indem während eines Stillstands des Kraftfahrzeugs mittels des Bremsensteuergerätes ein Bremsdruck in den Radbremsen 4 eingestellt wird, welcher das Kraftfahrzeug solange im Stillstand hält, bis die Bremse bei einem Anfahrsignal oder nach einer vorgegebenen Zeitdauer gelöst wird. In alternativen Ausgestaltungen der Erfindung kann es jedoch auch vorgesehen sein, dass die Bremskraft bei der HSA-Funktion mittels einer in Figur 1 nicht dargestellten elektronischen Feststellbremseinrichtung erzeugt wird, welche durch das Bremsensteuergerät steuerbar ist. Bevorzugt wird zur Realisierung der HSA-Funktion allerdings eine Energieversorgungseinheit der Betriebsbremsanlage eingesetzt, bei welcher das Auf- und Abbauen einer Bremskraft mit einer höheren Dynamik und einer geringeren Geräuschentwicklung vorgenommen werden kann.

Darüber hinaus verfügt das Kraftfahrzeug über einen Antriebsmotor 6, der von dem Fahrer mittels eines Fahrpedals 7 gesteuert wird. An dem Fahrpedal 7 ist ein in der Figur nicht dargestellter Pedalwegsensor angeordnet, mit dem die Fahrpedalstellung messbar ist. Das Messsignal dieses Sensors dient insbesondere als Eingangsgröße eines ebenfalls nicht dargestellten Motorsteuergerätes, welches in Abhängigkeit von der Fahrpedalstellung das von dem Fahrer angeforderte Antriebsmoment ermittelt, das dann durch eine entsprechende Steuerung in dem Antriebsmotor 6 erzeugt und auf die Räder 8 des Kraftfahrzeugs übertragen wird.

Die HSA-Funktion unterstützt den Fahrer bei Anfahrvorgängen an Steigungen, indem mittels des Bremsensteuergerätes eine Bremskraft an den Radbremsen 4 aufgebaut und/oder aufrechterhalten wird, bis ein Anfahrsignal ermittelt wird. Beim Auftreten des Anfahrsignals wird die Bremskraft dann auf den Wert Null reduziert, wobei die Verringerung der Bremskraft durch das Bremsensteuergerät gesteuert wird. Auf diese Weise kann der Fahrer bei einem Anfahrvorgang insbesondere das Bremspedal lösen und auf das Fahrpedal umsteigen, ohne dass das Kraftfahrzeug während des Umsteigens ungewollt in eine der Anfahrrichtung entgegengesetzte Richtung rollt.

Im Folgenden wird dabei davon ausgegangen, dass die Bremskraft in der Betriebsbremsanlage des Kraftfahrzeugs erzeugt wird. In dem Bremsensteuergerät wird dabei ein Bremsdruck ermittelt, welcher zum Halten des Kraftfahrzeugs erforderlich ist. Nach dem Auftreten eines Aktivierungssignals wird dieser Bremsdruck dann in den Radbremsen 4 eingestellt, wobei das Aktivierungssignal durch den Fahrer oder automatisch ausgelöst werden kann, beispielsweise wenn festgestellt wird, dass der Fahrer das Bremspedal löst.

Vorzugsweise wird dabei nur dann ein Bremsdruck mittels des Bremsensteuergerätes eingestellt, wenn die Steigung, an welcher das Kraftfahrzeug angehalten worden ist, größer als ein Schwellenwert ist. Dazu wird der Längsneigungswinkel des Kraftfahrzeugs mittels eines Neigungswinkelsensors oder mit Hilfe eines Längsbeschleunigungssensors ermittelt und mit dem Schwellenwert verglichen, der in einer bevorzugten Ausführungsform der Erfindung 2,9° beträgt, was einer Steigung von etwa 5% entspricht.

Bei der Verwendung eines Längsbeschleunigungssensors zum Ermitteln des Längsneigungswinkels gilt während des Stillstands des Fahrzeugs

$$\sin(\alpha) = -a_{Sensor}/g,$$

wobei $\alpha$ den Längsneigungswinkel, $a_{Sensor}$ die mit dem Längsbeschleunigungssensor gemessene Längsbeschleunigung und $g$ die Erdbeschleunigung bezeichnen. Dabei wurde das Vorzeichen so gewählt, dass sich ein positiver Längsneigungswinkel ergibt, wenn das Kraftfahrzeug in Bergaufrichtung steht.

Der Abbau des Bremsdrucks $p_{Rad}$ in den Radbremsen 4 erfolgt in einer vorteilhaften Ausführungsform der Erfindung nach dem Ablauf eines vorgegebenen, mit der Aktivierung der HSA-Funktion beginnenden Zeitintervalls, das vorzugsweise eine Dauer von 1,5 s hat, wobei mittels des Bremsensteuergerätes das Trennventil dosiert geöffnet oder der aktive Bremskraftverstärker geeignet angesteuert wird, um den Bremsdruck $p_{Rad}$ in den Radbremsen 4 zu reduzieren.

Darüber hinaus wird der Bremsdruck $p_{Rad}$ auch dann verringert, wenn innerhalb des Bremsensteuergerätes während des vorgegebenen Zeitintervalls ein Anfahrsignal ausgelöst wird.

Das Auslösen des Anfahrsignals erfolgt dabei, wenn der Gradient der Drehzahl des Antriebsmotors 6 einen vorgegebenen Motordrehzahlgradientenschwellenwert $k_1$ überschreitet und/oder wenn der Pedalweg, um den das Fahrpedal 7 eingetreten wird, einen vorgegebenen Pedalwegschwellenwert $k_2$ überschreitet. Der Motordrehzahlgradientenschwellenwert $k_1$ ist dabei größer als 1000 s$^{-2}$ und der Pedalwegschwellenwert $k_2$ größer als 20% des maximalen Pedalwegs, um den das Fahrpedal von der Ausgangsstellung bis zur Vollgasstellung eingetreten werden kann.

In einer bevorzugten Ausführungsform der Erfindung werden der Motordrehzahlgradientenschwellenwert $k_1$ sowie der Pedalwegschwellenwert $k_2$ dabei in Abhängigkeit von der vorliegenden Steigung bzw. dem in der beschriebenen Weise bestimmten Längsneigungswinkel des Kraftfahrzeugs ermittelt. Mit zunehmender Steigung ist dabei sowohl ein größerer Motordrehzahlgradientenschwellenwert $k_1$ als auch ein größerer Pedalwegschwellenwert $k_2$ erforderlich, um zu verhindern, dass das Fahrzeug bei einem Anfahrvorgang in eine der Anfahrrichtung entgegengesetzte Richtung rollt, da bei größeren Steigungen ein höheres Antriebsmoment bereitgestellt werden muss, um das Kraftfahrzeug anzufahren. Der Pedalweg, um den Fahrpedal 7 eingetreten ist, wird dabei mittels des an dem Fahrpedal angeordneten Pedalwegsensors ermittelt. Der Motordrehzahlgradient wird aus der Motordrehzahl berechnet, welche von dem Motorsteuergerät bereitgestellt wird.

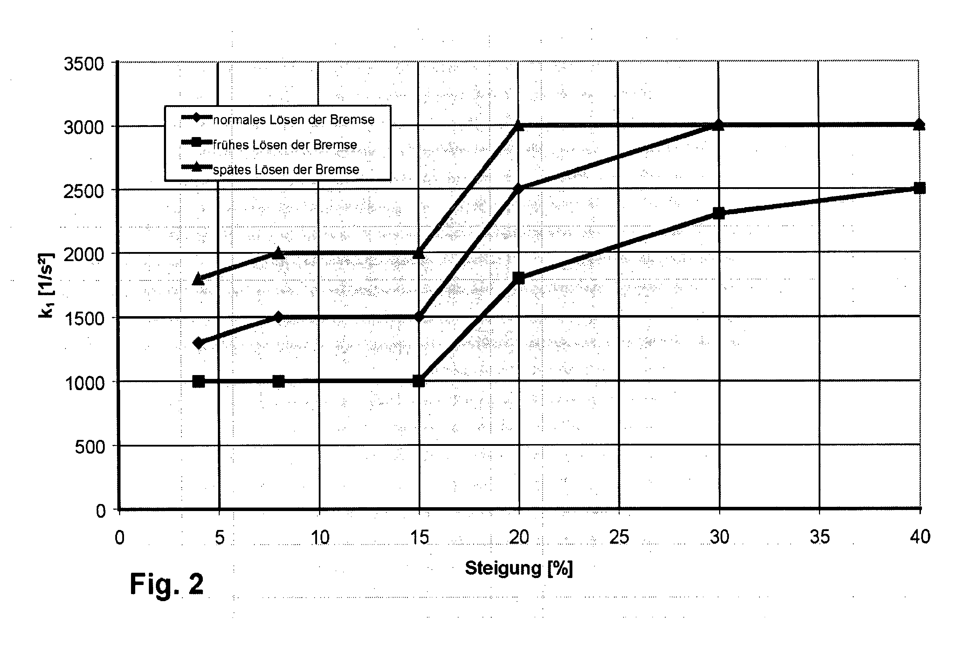

Die Abhängigkeit des Motordrehzahlgradientenschwellenwertes $k_1$ von der vorliegenden Steigung ist in Figur 2 anhand von Kennlinien veranschaulicht, welche sich aus den anhand von Symbolen dargestellten Stützstellen als Polygonzüge ergeben. Dabei ist grundsätzlich vorgesehen, dass der Motordrehzahlgradientenschwellenwert $k_1$ einen ersten Wert annimmt, wenn die vorliegende Steigung nicht größer als ein vorgegebener erster Schwellenwert ist. Übersteigt die vorliegende Steigung einen zweiten Schwellenwert, so nimmt der Motordrehzahlgradientenschwellenwert $k_1$ einen zweiten Wert an.

Empirische Untersuchungen haben dabei gezeigt, dass sich ein besonders komfortables Anfahrverhalten des Kraftfahrzeugs ergibt, wenn bei Steigungen zwischen ca. 8% und 15% ein Motordrehzahlgradientenschwellenwert $k_1$ von 1500 s$^{-2}$ gewählt wird, wie es anhand der Kennlinie für ein "normales" Lösen der Bremse in Figur 2 veranschaulicht ist. Weiterhin hat es sich, wie aus Figur 2 ersichtlich, für kleinere Steigung zwischen ca. 4% und 8% als vorteilhaft erwiesen, dass der Motordrehzahlgradientenschwellenwert $k_1$ von 1300 s$^{-2}$ auf 1500 s$^{-2}$ ansteigt. Bei Vorliegen größerer Steigungen steigt der Motordrehzahlgradientenschwellenwert $k_1$ vorzugsweise von 1500 s$^{-2}$ auf einen Wert von 2500 s$^{-2}$, der bei einer Steigung von 20% erreicht wird und weiter auf einen Wert von 3000 s$^{-2}$, der bei einer Steigung von 30% erreicht wird. Für Steigungen, die größer als 30% sind, wird vorteilhaft ebenso ein Motordrehzahlgradientenschwellenwert $k_1$ von 3000 s$^{-2}$ gewählt.

Ohne die Robustheit des HSA zu beeinträchtigen, kann der Motordrehzahlgradientenschwellenwert $k_1$ jedoch auch so gewählt werden, dass ein früheres oder ein späteres Lösen der Bremse bei dem Anfahrvorgang vorgenommen wird. Die Motordrehzahlgradientenschwellenwerte $k_1$ werden dabei in den anhand des ersten und des zweiten Schwellenwertes definierten Steigungsbereichen kleiner oder größer gewählt als die zuvor dargestellten Standardwerte bzw. gleich groß gewählt wie diese, falls eine Erhöhung oder eine Verringerung nicht zu befriedigenden Resultaten führt.

Wird dabei ein spätes Lösen der Bremse gewünscht, so beträgt der Motordrehzahlgradientenschwellenwert $k_1$ für Steigungen zwischen 8% und 15% vorzugsweise 2000 $s^{-2}$ und wird bei Steigungen über 20% auf vorzugsweise 3000 $s^{-2}$ erhöht. Für Steigungen zwischen 15% und 20% steigt er linear von 2000 $s^{-2}$ auf 3000 $s^{-2}$ an. Ferner ist es vorgesehen, dass der Motordrehzahlgradientenschwellenwert $k_1$ für Steigungen zwischen 4% und 8% von 1800 $s^{-2}$ auf 2000 $s^{-2}$ ansteigt. Um ein frühes Lösen der Bremse beim Anfahren vorzunehmen, hat sich bei Steigungen zwischen 4% und 15% ein Motordrehzahlgradientenschwellenwert $k_1$ von 1000 $s^{-2}$ als vorteilhaft erwiesen. Bei Steigungen zwischen 15% und 20% steigt der Motordrehzahlgradientenschellenwert vorzugsweise von 1000 $s^{-2}$ auf 1800 $s^{-2}$ an. Für größere Steigungen hat sich ein Anstieg des Motordrehzahlgradientenschwellenwertes $k_1$ auf 2300 $s^{-2}$ bei 30% und eine weitere Erhöhung auf einen Wert von 2500 $s^{-2}$, der bei 40% Steigung erreicht wird, ebenfalls als besonders vorteilhaft erwiesen. Die entsprechenden Kennlinien sind ebenfalls in dem Diagramm in Figur 2 dargestellt.

Welche der Kennlinien verwendet wird, wird vorzugsweise bei der Erstausrüstung des Kraftfahrzeugs entsprechend den Wünschen des Fahrzeugherstellers festgelegt. Es ist jedoch grundsätzlich auch möglich, dass alle Kennlinien in dem Bremsensteuergerät gespeichert werden und der Fahrer seinen Bedürfnissen entsprechend eine der Kennlinien auswählt.

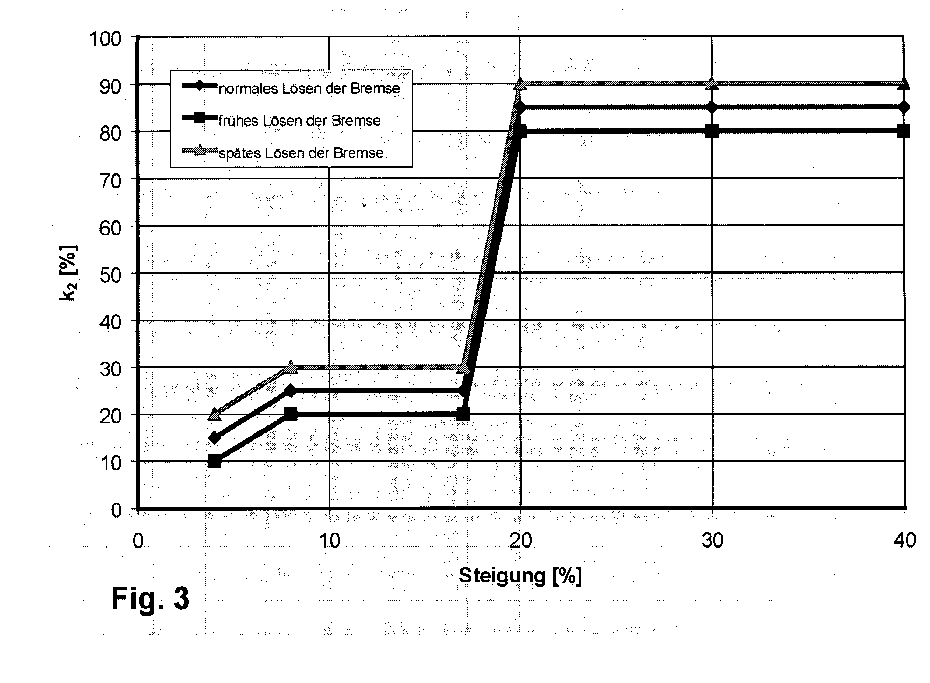

In ähnlicher Weise wie der Motordrehzahlgradientenschwellenwert $k_1$ wird auch der Pedalwegschwellenwert $k_2$ an die vorliegende Steigung angepasst. Die Abhängigkeit des Pedalwegschwellenwertes $k_2$ von der Steigung ist dabei in Figur 3 anhand von Kennlinien veranschaulicht, bei denen es sich ebenfalls um Polygonzüge handelt, die anhand der in Figur 3 dargestellten Stützstellen definiert sind.

Auch der Pedalwegschwellenwert $k_2$ nimmt einen ersten Wert an, wenn die vorliegende Steigung kleiner als ein vorgegebener erster Schwellenwert ist, und wird auf einen zweiten Wert erhöht, wenn die Steigung einen zweiten Schwellenwert übersteigt. Die beiden Schwellenwerte für die Steigung entsprechen dabei vorzugsweise im Wesentlichen den zuvor im Zusammenhang mit dem Motordrehzahlgradientenschwellenwert $k_1$ beschriebenen Schwellenwerten.

Umfangreiche Tests haben ergeben, dass das Kraftfahrzeug besonders komfortabel angefahren werden kann, wenn bei Steigungen zwischen ca. 8% und 17% ein Standardwert $k_2$ von 25% des maximalen Pedalwegs und für Steigungen, die größer als ca. 20% sind, ein Standardwert von 85% des maximalen Pedalwegs für den Pedalwegschwellenwert $k_2$ gewählt wird. Für Steigungen zwischen 4% und 8% steigt der Pedalwegschwellenwert $k_2$ mit der vorliegenden Steigung vorzugsweise von 15% auf 25% des maximalen Pedalwegs an. In Figur 3 ist dies anhand der Kennlinie für ein "normales" Lösen der Bremse veranschaulicht.

Gleichfalls kann auch ein früheres oder späteres Lösen der Bremse bei dem Anfahrvorgang vorgenommen werden, indem die Pedalwegschwellenwerte $k_2$ verringert oder erhöht werden. Wird ein späteres Lösen der Bremse gewünscht, so haben sich für Steigungen zwischen ca. 8% und 17% ein Pedalwegschwellenwert von 30% des maximalen Pedalwegs und für Steigungen über 20% ein Pedalwegschwellenwert $k_2$ von 90% des maximalen Pedalwegs als besonders vorteilhaft erwiesen. Bei Steigungen zwischen 4% und 8% steigt der Pedalwegschwellenwert $k_2$ von 20% auf 30% des maximalen Pedalwegs an, um eine spätes Lösen der Bremse zu erreichen. Ein frühzeitiges Lösen der Bremse bei einem Anfahrvorgang kann vorzugsweise erreicht werden, wenn für Steigungen zwischen 8% und 17% ein Pedalwegschwellenwert $k_2$ von 20% des maximalen Pedalwegs und für Steigungen über 20% ein Pedalwegschwellenwert $k_2$ von 80% des maximalen Pedalwegs gewählt wird. Bei Steigungen zwischen 4% und 8% hat sich ein Anstieg des Pedalwegschwellenwertes $k_2$ von 10% auf 20% des maximalen Pedalwegs als besonders vorteilhaft erwiesen, um ein frühzeitiges Lösen der Bremse sicherzustellen.

Welche der dargestellten Kennlinien dabei verwendet wird, wird auch hier vorzugsweise bei der Erstausrüstung des Kraftfahrzeugs entsprechend den Wünschen des Fahrzeugherstellers festgelegt. Es ist jedoch grundsätzlich ebenfalls möglich, dass alle Kennlinien in dem Bremsensteuergerät gespeichert werden und der Fahrer seinen Bedürfnissen entsprechend eine der Kennlinien auswählt.

Darüber hinaus werden von den Kennlinien zur Bestimmung des Motordrehzahlgradientenschwellenwertes $k_1$ und des Pedalwegschwellenwertes $k_2$ die einander entsprechenden verwendet. D.h. beispielsweise, dass sowohl für den Motordrehzahlgradientenschwellenwert $k_1$ als auch für den Pedalwegschwellenwert $k_2$ die Kennlinie ausgewählt wird, welche die Standardwerte angibt, wenn ein "normales" Lösen der Bremse gewünscht wird.

Um den Anfahrvorgang für den Fahrer besonders komfortabel zu gestalten, wird der von dem Bremsensteuergerät während des Abbaus des Bremsdrucks $p_{Rad}$ eingestellte Druckabbaugradient $dp_{Rad}/dt$ an die von dem Fahrer zum Anfahren gewählte Fahrpedalstellung und den während des Stillstands des Kraftfahrzeugs vorliegenden Bremsdruck $p_{Rad}$ angepasst. Grundsätzlich ist es dabei vorgesehen, dass ein umso höherer Druckabbaugradient $dp_{Rad}/dt$ eingestellt wird, je weiter das Fahrpedal eingetreten wird und je größer der vorliegende Bremsdruck $p_{Rad}$ ist.

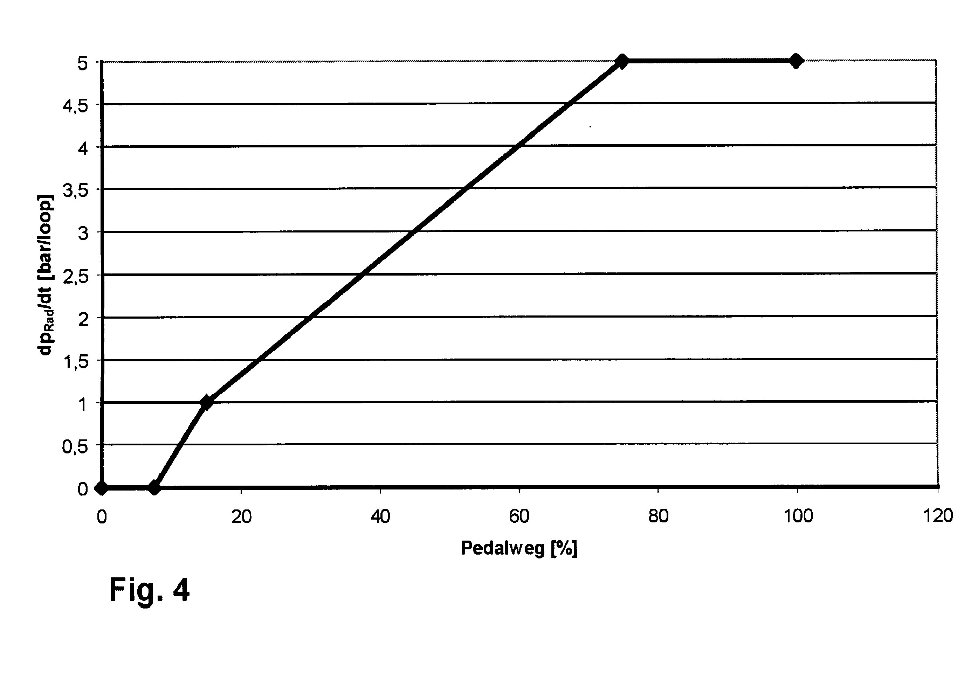

Die Abhängigkeit des Druckabbaugradienten $dp_{Rad}/dt$ von der Fahrpedalstellung ist anhand des in Figur 4 gezeigten Diagramms veranschaulicht. Auf der horizontalen Achse ist dabei der Pedalweg in % des maximalen Pedalwegs und auf der vertikalen Achse der Betrag des negativen Druckabbaugradienten $dp_{Rad}/dt$ in der Einheit bar/loop aufgetragen, wobei mit dem Begriff "loop" die Dauer eines Taktschritts des getaktet arbeitenden Bremsensteuergerätes bezeichnet ist, welche üblicherweise etwa 10 ms beträgt.

Wie in dem Diagramm in Figur 4 ersichtlich ist, erfolgt ein Druckabbau in den Radbremsen dann, wenn der Pedalweg, um den das Fahrpedal eingetreten ist, größer als ein vorgegebener Wert ist, der vorzugsweise 7,5% des Pedalwegs bis zur Vollgasstellung beträgt, wobei das Anfahrsignal in Abhängigkeit von dem Ergebnis des Vergleichs zwischen dem Motordrehzahlgradienten und dem Motordrehzahlgradientenschwellenwert ausgelöst wird, wenn der Pedalweg, um den das Fahrpedal eingetreten wird, kleiner als der Pedalwegschwellenwert ist. Ist der Pedalweg, um den das Fahrpedal eingetreten ist, größer als der vorgegebene Wert, so steigt der eingestellte Wert des Druckabbaugradienten $dp_{Rad}/dt$, wie in Figur 4 dargestellt, betraglich bis zu einem Wert von vorzugsweise 5 bar/loop, der vorzugsweise erreicht wird, wenn das Fahrpedal um ca. 75% des maximalen Pedalwegs eingetreten ist. Für größere Pedalwege wird ebenfalls ein Wert von 5 bar/loop gewählt.

Auf diese Weise wird dem Wunsch des Fahrers nach einem zügigen Anfahren des Kraftfahrzeugs Rechnung getragen, der in der Regel besteht, wenn der Fahrer das Fahrpedal stärker eintritt.

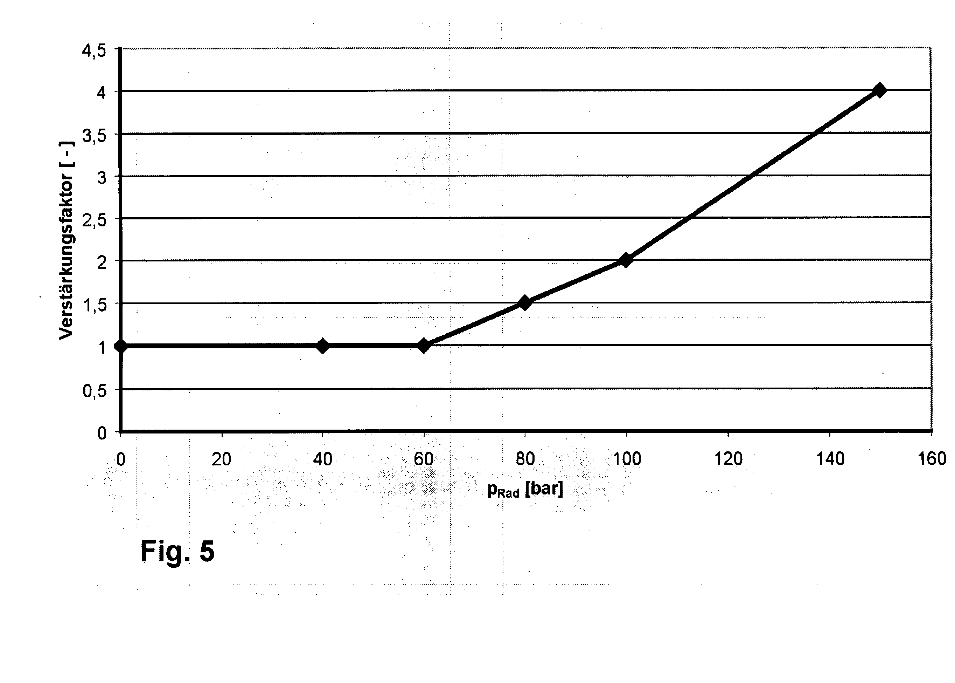

Der in der zuvor beschriebenen Weise anhand der Fahrpedalstellung ermittelte Wert des Druckabbaugradienten $dp_{Rad}/dt$ wird vorzugsweise in Abhängigkeit von dem während des Stillstands, d.h. zu Beginn des Druckabbaus, in den Radbremsen 4 vorliegenden Bremsdrucks $p_{Rad}$ mit einem Faktor gewichtet bzw. verstärkt. Der Verstärkungsfaktor wird dabei als Funktion des in der Betriebsbremsanlage vorliegenden Bremsdrucks $p_{Rad}$ anhand einer Kennlinie ermittelt, die in dem Diagramm in Figur 5 dargestellt ist. Es handelt sich bei der Kennlinie wiederum um einen Polygonzug, welcher anhand der dargestellten Stützstellen definiert wird.

Wie aus dem Diagramm in Figur 5 ersichtlich ist, weist der Verstärkungsfaktor bei Vorliegen von Bremsdrücken $p_{Rad}$, die nicht größer als ein vorgegebener Wert von vorzugsweise ca. 60 bar sind, den Wert 1 auf, so dass der in Abhängigkeit von der Fahrpedalstellung ermittelte Druckabbaugradient $dp_{Rad}/dt$ unverändert eingestellt wird. Bei Vorliegen größerer Bremsdrücke $p_{Rad}$ in der Betriebsbremsanlage steigt der Wert des Verstärkungsfaktors vorzugsweise mit dem Bremsdruck $p_{Rad}$ bis auf einen Wert von vorzugsweise 4, der in einer vorteilhaften Ausführungsform der Erfindung bei etwa 150 bar erreicht wird.

Somit wird beispielsweise dann, wenn ein Anfahrsignal ausgelöst wird, während der Fahrer das Fahrpedal um mehr als 75% des maximalen Pedalwegs eingetreten hat und in der Betriebsbremsanlage ein Bremsdruck $p_{Rad}$ von 100 bar eingestellt ist, d.h. ein Verstärkungsfaktor von 2 ermittelt wird, ein Druckabbaugradient $dp_{Rad}/dt$ von -10 bar/loop eingestellt.

Die beispielhaft dargestellte erfindungsgemäße Ausgestaltung der HSA-Funktion erlaubt es, die Funktion in besonders einfacher Weise in verschiedenen Fahrzeugtypen zu applizieren, da die beschriebenen Bedingungen zur Auslösung eines Anfahrsignals bei verschiedenen Fahrzeugtypen gleichermaßen verwendet werden können. Dies führt zu einer erheblichen Reduzierung des Entwicklungsaufwandes, da die Anpassung der HSA-Funktion an einen bestimmten Fahrzeugtyp einfach und schnell vorgenommen werden kann.

Wie sich bei empirischen Untersuchungen herausgestellt hat, führen zudem die gleichen Bedingungen bei unterschiedlichen Motor-Getriebe-Varianten eines Fahrzeugtyps zu einem sehr ähnlichen Anfahrverhalten, so dass eine Anpassung der HSA-Funktion an die unterschiedlichen Motor-Getriebe-Varianten nicht erforderlich ist.

**Patentansprüche**

1. Verfahren zum Verhindern, dass ein Fahrzeug bei einem Anfahrvorgang in eine der Anfahrrichtung entgegengesetzte Richtung rollt, wobei während eines Stillstands des Fahrzeugs eine Bremskraft an wenigstens einer Radbremse aufgebaut und/oder aufrechterhalten wird,
**dadurch gekennzeichnet,**
**dass** ein Vergleich zwischen einem Motordrehzahlgradienten und einem Motordrehzahlgradientenschwellenwert ($k_1$) sowie ein Vergleich zwischen einem Pedalweg, um den ein Fahrpedal (7) des Fahrzeugs eingetreten ist, und einem Pedalwegschwellenwert ($k_2$) durchgeführt werden, und dass die Bremskraft an der Radbremse (4) verringert wird, wenn festgestellt wird, dass der Motordrehzahlgradient größer ist als der Motordrehzahlgradientenschwellenwert ($k_1$) und der Pedalweg, um den das Fahrpedal (7) eingetreten ist, größer ist als der Pedalwegschwellenwert ($k_2$), wobei der Motordrehzahlgradientenschwellenwert ($k_1$) und der Pedalwegschwellenwert ($k_2$) in Abhängigkeit von einem vorliegenden Längsneigungswinkel ($\alpha$) des Fahrzeugs ermittelt werden.

2. Verfahren nach Anspruch 1,
**dadurch gekennzeichnet,**
**dass** der Motordrehzahlgradientenschwellenwert ($k_1$) größer als 1000 $s^{-2}$ ist.

3. Verfahren nach Anspruch 1 oder 2,
**dadurch gekennzeichnet,**
**dass** der Motordrehzahlgradientenschwellenwert

$(k_1)$ 1500 $s^{-2}$ beträgt.

4. Verfahren nach einem der vorangegangenen Ansprüche,
   **dadurch gekennzeichnet,**
   **dass** der Pedalwegschwellenwert $(k_2)$ größer als 20% des maximalen Pedalwegs ist.

5. Verfahren nach einem der vorangegangenen Ansprüche,
   **dadurch gekennzeichnet,**
   **dass** der Pedalwegschwellenwert $(k_2)$ 25% des maximalen Pedalwegs beträgt.

6. Verfahren nach einem der vorangegangenen Ansprüche,
   **dadurch gekennzeichnet,**
   **dass** der Motordrehzahlgradientenschwellenwert mit dem Längsneigungswinkel $(\alpha)$ des Fahrzeugs ansteigt.

7. Verfahren nach einem der vorangegangenen Ansprüche,
   **dadurch gekennzeichnet,**
   **dass** der Pedalwegschwellenwert $(k_2)$ mit dem Längsneigungswinkel $(\alpha)$ des Fahrzeugs ansteigt.

8. Verfahren nach einem der vorangegangenen Ansprüche,
   **dadurch gekennzeichnet,**
   **dass** die Bremskraft an der Radbremse (4) dadurch erzeugt wird, dass in der Radbremse (4) ein Bremsdruck $(p_{Rad})$ aufgebaut und/oder aufrechterhalten wird, wobei eine Verringerung der Bremskraft dadurch erfolgt, dass der Bremsdruck $(p_{Rad})$ mit einem Bremsdruckabbaugradienten $(\dot{p}_{Rad})$ reduziert wird.

9. Verfahren nach Anspruch 8,
   **dadurch gekennzeichnet,**
   **dass** der Bremsdruckabbaugradient $(dp_{Rad}/dt)$ in Abhängigkeit von dem Pedalweg, um den das Fahrpedal (7) eingetreten ist, ermittelt wird.

10. Verfahren nach Anspruch 9,
    **dadurch gekennzeichnet,**
    **dass** der Bremsdruckabbaugradient $(dp_{Rad}/dt)$ mit dem Pedalweg, um den das Fahrpedal (7) eingetreten ist, ansteigt.

11. Verfahren nach Anspruch einem der Ansprüche 8 bis 10,
    **dadurch gekennzeichnet,**
    **dass** der Bremsdruckabbaugradient $(dp_{Rad}/dt)$ in Abhängigkeit von dem in der Radbremse (4) vorliegenden Bremsdruck $(p_{Rad})$ ermittelt wird.

12. Verfahren nach Anspruch 11,
    **dadurch gekennzeichnet,**

**dass** der Bremsdruckabbaugradient $(dp_{Rad}/dt)$ mit dem in der Radbremse vorliegenden Bremsdruck $(p_{Rad})$ ansteigt.

13. Vorrichtung zum Verhindern, dass ein Fahrzeug bei einem Anfahrvorgang in eine der Anfahrrichtung entgegengesetzte Richtung rollt, umfassend wenigstens eine Radbremse (4), an der während eines Stillstands des Fahrzeugs eine Bremskraft einstellbar ist, einen Antriebsmotor (6), der durch ein Fahrpedal (7) steuerbar ist, und wenigstens ein Vergleichsmittel, in dem ein Vergleich zwischen einem Motordrehzahlgradienten und einem Motordrehzahlgradientenschwellenwert $(k_1)$ sowie ein Vergleich zwischen einem Pedalweg, um den das Fahrpedal (7) eingetreten ist, und einem Pedalwegschwellenwert $(k_2)$ durchführbar sind, wobei die Bremskraft in der Radbremse (4) verringerbar ist, wenn in dem Vergleichsmittel festgestellt wird, dass der Motordrehzahlgradient größer ist als der Motordrehzahlgradientenschwellenwert $(k_1)$ und der Pedalweg, um den das Fahrpedal (7) eingetreten ist, größer ist als der Pedalwegschwellenwert $(k_2)$, wobei der Motordrehzahlgradientenschwellenwert $(k_1)$ und der Pedalwegschwellenwert $(k_2)$ in Abhängigkeit von einem vorliegenden Längsneigungswinkel $(\alpha)$ des Fahrzeugs ermittelt werden.

**Claims**

1. Method for preventing a vehicle from rolling in a direction opposite to the starting direction during a starting process, wherein during a stationary state of the vehicle a braking force is built up and/or maintained at at least one wheel brake,
   **characterized**
   **in that** a comparison is made between an engine rotational speed gradient and an engine rotational speed gradient threshold value $(k_1)$, and a comparison is made between a pedal travel, which is the amount by which an accelerator pedal (7) of the vehicle is depressed, and a pedal travel threshold value $(k_2)$, and in that the braking force at the wheel brake (4) is reduced if it is detected that the engine rotational speed gradient is larger than the engine rotational speed gradient threshold value $(k_1)$, and the pedal travel which is the amount by which the accelerator pedal (7) is depressed is larger than the pedal travel threshold value $(k_2)$, wherein the engine rotational speed gradient threshold value $(k_1)$ and the pedal travel threshold value $(k_2)$ are determined as a function of a present longitudinal inclination angle $(\alpha)$ of the vehicle.

2. Method according to Claim 1,
   **characterized**
   **in that** the engine rotational speed gradient thresh-

old value ($k_1$) is larger than 1000 s$^{-2}$.

3. Method according to Claim 1 or 2,
**characterized**
**in that** the engine rotational speed gradient threshold value ($k_1$) is 1500 s$^{-2}$.

4. Method according to one of the preceding claims,
**characterized**
**in that** the pedal travel threshold value ($k_2$) is larger than 20% of the maximum pedal travel.

5. Method according to one of the preceding claims,
**characterized**
**in that** the pedal travel threshold value ($k_2$) is 25% of the maximum pedal travel.

6. Method according to one of the preceding claims,
**characterized**
**in that** the engine rotational speed gradient threshold value increases with the longitudinal inclination angle ($\alpha$) of the vehicle.

7. Method according to one of the preceding claims,
**characterized**
**in that** the pedal travel threshold value ($k_2$) increases with the longitudinal inclination angle ($\alpha$) of the vehicle.

8. Method according to one of the preceding claims,
**characterized**
**in that** the braking force at the wheel brake (4) is generated in that a braking force ($p_{wheel}$) is built up and/or maintained in the wheel brake (4), wherein the braking force is reduced in that the brake pressure ($p_{wheel}$) is reduced with a brake pressure reduction gradient ($d_{Pwheel}/dt$) .

9. Method according to Claim 8,
**characterized**
**in that** the brake pressure reduction gradient ($dp_{wheel}/dt$) is determined as a function of the pedal travel which is the amount by which the accelerator pedal (7) is depressed.

10. Method according to Claim 9,
**characterized**
**in that** the brake pressure reduction gradient ($dp_{wheel}/dt$) increases with the pedal travel which is the amount by which the accelerator pedal (7) is depressed.

11. Method according to one of Claims 8 to 10,
**characterized**
**in that** the brake pressure reduction gradient ($dp_{wheel}/dt$) is determined as a function of the brake pressure ($p_{wheel}$) which is present in the wheel brake (4) .

12. Method according to Claim 11,
**characterized**
**in that** the brake pressure reduction gradient ($dp_{wheel}/dt$) increases with the brake pressure ($p_{wheel}$) which is present in the wheel brake.

13. Device for preventing a vehicle from rolling in a direction opposite to the starting direction during a starting process, comprising at least one wheel brake (4) at which a braking force can be set during a stationary state of the vehicle, a drive engine (6) which can be controlled by an accelerator pedal (7), and at least one comparison means in which a comparison is made between an engine rotational speed gradient and an engine rotational speed gradient threshold value ($k_1$), and a comparison is made between a pedal travel, which is the amount by which the accelerator pedal (7) is depressed, and a pedal travel threshold value ($k_2$), wherein the braking force in the wheel brake (4) can be reduced if it is detected in the comparison means that the engine rotational speed gradient is larger than the engine rotational speed gradient threshold value ($k_1$), and the pedal travel which is the amount by which the accelerator pedal (7) is depressed is larger than the pedal travel threshold value ($k_2$), wherein the engine rotational speed gradient threshold value ($k_1$) and the pedal travel threshold value ($k_2$) are determined as a function of a present longitudinal inclination angle ($\alpha$) of the vehicle.

## Revendications

1. Procédé destiné à empêcher qu'un véhicule, lors d'une opération de démarrage, ne roule dans une direction opposée à la direction de démarrage, une force de freinage étant appliquée et/ou maintenue sur au moins un frein de roue pendant un arrêt du véhicule,
**caractérisé en ce que**
l'on effectue une comparaison entre un gradient de régime du moteur et une valeur seuil de gradient de régime du moteur ($k_1$) ainsi qu'une comparaison entre une course de pédale suivant laquelle une pédale d'accélération (7) du véhicule est enfoncée, et une valeur seuil de course de pédale ($k_2$), et **en ce que** la force de freinage appliquée au frein de roue (4) est réduite, lorsque l'on constate que le gradient de régime du moteur est supérieur à la valeur seuil de gradient de régime du moteur ($k_1$) et que la course de pédale suivant laquelle la pédale d'accélération (7) est enfoncée est supérieure à la valeur seuil de course de pédale ($k_2$), la valeur seuil de gradient de régime du moteur ($k_1$) et la valeur seuil de course de pédale ($k_2$) étant déterminées en fonction d'un angle d'inclinaison longitudinal existant ($\alpha$) du véhicule.

**2.** Procédé selon la revendication 1,
**caractérisé en ce que**
la valeur seuil de gradient de régime du moteur ($k_1$) est supérieure à 1000 s$^{-2}$.

**3.** Procédé selon la revendication 1 ou 2,
**caractérisé en ce que**
la valeur seuil de gradient de régime du moteur ($k_1$) vaut 1500 s$^{-2}$.

**4.** Procédé selon l'une quelconque des revendications précédentes,
**caractérisé en ce que**
la valeur seuil de course de pédale ($k_2$) est supérieure à 20 % de la course de pédale maximale.

**5.** Procédé selon l'une quelconque des revendications précédentes,
**caractérisé en ce que**
la valeur seuil de course de pédale ($k_2$) vaut 25 % de la course de pédale maximale.

**6.** Procédé selon l'une quelconque des revendications précédentes,
**caractérisé en ce que**
la valeur seuil de gradient de régime du moteur augmente avec l'angle d'inclinaison longitudinal ($\alpha$) du véhicule.

**7.** Procédé selon l'une quelconque des revendications précédentes,
**caractérisé en ce que**
la valeur seuil de course de pédale ($k_2$) augmente avec l'angle d'inclinaison longitudinal ($\alpha$) du véhicule.

**8.** Procédé selon l'une quelconque des revendications précédentes,
**caractérisé en ce que**
la force de freinage appliquée au frein de roue (4) est produite par le fait qu'une pression de freinage ($p_{Rad}$) est appliquée et/ou maintenue dans le frein de roue (4), une réduction de la force de freinage se produisant par le fait que la pression de freinage ($p_{Rad}$) est réduite avec un gradient de diminution de la pression de freinage ($dp_{Rad}/dt$) .

**9.** Procédé selon la revendication 8,
**caractérisé en ce que**
le gradient de diminution de la pression de freinage ($dp_{Rad}/dt$) est déterminé en fonction de la course de pédale suivant laquelle la pédale d'accélération (7) est enfoncée.

**10.** Procédé selon la revendication 9,
**caractérisé en ce que** le gradient de diminution de la pression de freinage ($dp_{Rad}/dt$) augmente avec la course de pédale suivant laquelle la pédale d'accélération (7) est enfoncée.

**11.** Procédé selon l'une quelconque des revendications 8 à 10,
**caractérisé en ce que**
le gradient de diminution de la pression de freinage ($dp_{Rad}/dt$) est déterminé en fonction de la pression de freinage ($p_{Rad}$) existant dans le frein de roue (4).

**12.** Procédé selon la revendication 11,
**caractérisé en ce que**
le gradient de diminution de la pression de freinage ($dp_{Rad}/dt$) augmente avec la pression de freinage ($p_{Rad}$) existant dans le frein de roue.

**13.** Dispositif destiné à empêcher qu'un véhicule, lors d'une opération de démarrage, ne roule dans une direction opposée à la direction de démarrage, comprenant au moins un frein de roue (4), au niveau duquel une force de freinage peut être ajustée pendant un arrêt du véhicule, un moteur d'entraînement (6), qui peut être commandé par une pédale d'accélération (7), et au moins un moyen de comparaison, dans lequel peuvent être effectuées une comparaison entre un gradient de régime du moteur et une valeur seuil de gradient de régime du moteur ($k_1$) ainsi qu'une comparaison entre une course de pédale suivant laquelle la pédale d'accélération (7) est enfoncée, et une valeur seuil de course de pédale ($k_2$), la force de freinage dans le frein de roue (4) pouvant être réduite lorsque l'on constate dans le moyen de comparaison que le gradient de régime du moteur est supérieur à la valeur seuil de gradient de régime du moteur ($k_1$) et que la course de pédale suivant laquelle la pédale d'accélération (7) est enfoncée est supérieure à la valeur seuil de course de pédale ($k_2$), la valeur seuil de gradient de régime du moteur ($k_1$) et la valeur seuil de course de pédale ($k_2$) étant déterminées en fonction d'un angle d'inclinaison longitudinal existant ($\alpha$) du véhicule.

Fig. 1

Fig. 2

EP 1 827 939 B1

Fig. 3

**Fig. 4**

EP 1 827 939 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1023547 B1
- DE 10306363 A1

- EP 1442951 A